# EUROPÄISCHE PATENTSCHRIFT

(11) **EP 1 731 219 B1**
(45) Veröffentlichungstag und Bekanntmachung des Hinweises auf die Patenterteilung: **23.05.2007**
(21) Anmeldenummer: 05012600.2
(22) Anmeldetag: 11.06.2005
(51) Int. Cl.: B01J 13/04

(54) **Verfahren zur Mikroverkapselung von organischen Stoffen in Partikelform mittels Einsprühen eines inerten überkritischen Trägergases zusammen mit Beschichtungsmaterial für die organischen Stoffe in eine Hochdruckwirbelschicht in einem Autoklaven**
Process for encapsulating organic substances in particle form by spraying an inert, supercritical carrier gas together with the coating material for the organic substance into a high pressure fluidised bed contained in an autoclave
Procédé pour l'encapsulage de substances organiques dans forme particulière, effectué en atomisant un gaz inert et surcritique avec un matériau destiné à revêtir ladit substance dans un lit fluidisé à haut pression situé dans un autoclave

(43) Veröffentlichungstag der Anmeldung: 13.12.2006
(73) Patentinhaber: TuTech Innovation GmbH, 21079 Hamburg (DE); Technische Universität Hamburg-Harburg, 21073 Hamburg (DE)
(72) Erfinder: Brunner, Gerd, Prof. Dr.-Ing. habil., 20149 Hamburg (DE); Werther, Joachim, Prof. Dr.-Ing. habil, 21244 Buchholz (DE)
(74) Vertreter: Fleck, Thomas

(56) Entgegenhaltungen:
- EP-A- 0 542 314
- DE-A1- 10 210 449
- DE-C1- 19 711 393
- US-B1- 6 183 783
- US-B1- 6 426 116

## Beschreibung

Die Erfindung betrifft ein Verfahren zur Mikroverkapselung von organischen Stoffen in Partikelform mittels Einsprühen eines inerten überkritischen Trägergases zusammen mit Beschichtungsmaterial für die organischen Stoffe in eine Hochdruckwirbelschicht in einem Autoklaven.

Ein derartiges Verfahren ist aus der DE 197 11 393 C1 bekannt geworden. Danach wird zum Mikroverkapseln von Substraten in Partikelform > 100 µm in einer Wirbelschicht, das in einem überkritischen Fluid gelöste Kapselmaterial in feinen Tropfen bzw. Partikeln in die ggf. unter überkritischen Bedingungen gehaltene Wirbelschicht der Partikel eingedüst, und wobei die Schichtdicke zwischen > 1 µm bis zu wenigen µm liegt. Sowohl als Lösungsmittel für das Beschichtungsmaterial als auch als Fluidisationsgas wurde überkritischer Kohlendioxid eingesetzt. Hierbei handelt es sich nicht um ein kontinuierliches Feststoffverfahren.

Beispielhaft wurden Glasperlen (40-60 µm) mit Sterylsterat oder Hexogen mit PETN/TNT beschichtet. Das Beschichtungsmaterial wurde dabei in überkritischem Kohlendioxid gelöst und in eine mit überkritischem Kohlendioxid fluidisierte Hochdruckwirbelschicht versprüht. Ein im Vergleich zu den Betriebsbedingungen vor der Düse deutlich geringerer Druck führte jedoch zu einer verringerten Löslichkeit des Sterylsterats im Kohlendioxid, so dass es bei der Versprühung zu einer hohen Übersättigung im Bereich der Düse und somit zum Ausfall von Sterylsterattropfen kam.

Da sich Proteine nicht im überkritischen Kohlendioxid lösen lassen, bot sich dieses vorbekannte Verfahren eigentlich zur Weiterentwicklung nicht an.

Der Erfindung liegt deshalb die Aufgabe zugrunde, die eingangs genannte Verfahrensweise zur Mikroverkapselung auf Proteine und dgl. anzupassen und sicherzustellen, dass keine Agglomerationen oder Tropfenbildung auftreten, wobei wiederum die Verkapselungsdicke und/oder -Dichtheit steuerbar sein sollte, um eine bestimmte Retardwirkung des bzw. der Proteinwirkstoffe zu ermöglichen.

Die Aufgabe wird in überraschenderweise dadurch gelöst, das gleichzeitig Protein(e) als organische Stoffe in Form einer wässrigen Lösung durch das Trägergas in die Hochdruckwirbelschicht mit eingesprüht werden, wobei eine durchschnittliche Partikelgröße von ca. 20 bis 1.000 µm, insbesondere 30 bis 300 µm, mit einer Schichtdicke von 0,5 bis 10 µm, insbesondere 1 bis 2 µm, entsteht.

Gegenüber dem zweistufig arbeitenden eingangs genannten Stand der Technik wird also erfindungsgemäß nur einstufig gearbeitet, wobei es als überraschend anzusehen ist, dass sich beim gleichzeitigen Einsprühen der verschiedenen Phasen dennoch die gewünschte Schichtenanordnung und auch Dicke ausbildet. Ein immenser Vorteil wird auch dadurch erzielt, dass frei von organischen Lösungsmitteln gearbeitet wird. Vorteilhafterweise kann auch zusätzlich ein Trägerfeststoff eingesetzt werden, so dass nicht nur zwei, sondern drei Phasen miteinander vermischt werden.

Weitere Vorteile und Merkmale gehen aus den Unteransprüchen hervor, die auch gemeinsam mit dem Hauptanspruch von erfinderischer Bedeutung sein können.

Nachfolgend wird die Erfindung anhand mehrerer Ausführungsbeispiele näher beschrieben, die dem besseren Verständnis der Erfindung dienen sollen, auf die letztere jedoch nicht beschränkt ist.

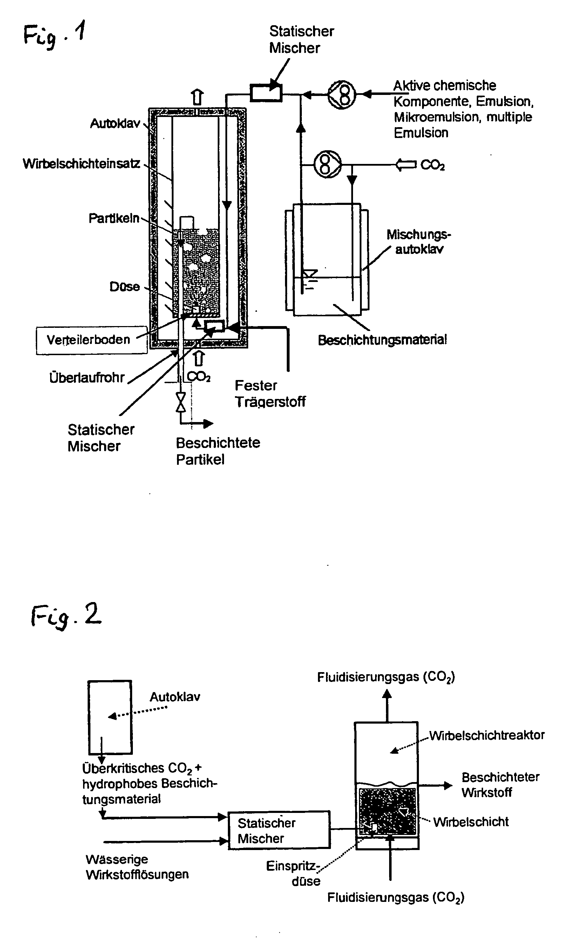

Das erfindungsgemäße Verfahren wurde dabei in Anlagen durchgeführt, deren prinzipieller Aufbau aus den Figuren 1 und 2 hervorgeht.
- Fig. 1: zeigt eine schematische Darstellung des Wirbelschichtreaktors mit der Verkapselung; und
- Fig. 2: zeigt eine schematische Skizze der Lipidverkapselung in der Wirbelschicht.

Mit dem erfindungsgemäßen Verfahren werden Proteine jeglicher Art (Eiweiße, Eiweißstoffe, Eiweißkörper) mit hydrophoben Stoffen (Wachse, Glyceride etc.) in einer Hochdruckwirbelschicht lösungsmittelfrei in einem absatzweise oder kontinuierlich durchführbaren Verfahren einstufig mikroverkapselt, so z.B. BSA (Rinderserumalbumin)
oder Rinderinsulin. Weitere Proteine liegen für den Fachmann auf der Hand. Drei unterschiedliche Verfahrensprinzipien bieten sich hierbei an:
1. Vermischen einer Gasphase aus überkritischen CO₂ und darin gelösten Beschichtungsmaterialien und der wässrigen Proteinlösung unmittelbar vor dem Düsenbereich in einem statischen Mischungsautoklav und/oder Bildung einer Mikroemulsion in Zweistoffdüsen, die über eine Düse versprüht wird und anschließend in der Wirbelschicht feste Partikel bildet, die aus einer hydrophoben Außenschicht und einer eingeschlossenen Proteinwirkstofflösung bestehen. Die fluidisierte Schicht bildet sich dabei aus dem eingesprühten Material aus.
2. Es wird zusätzlich ein Trägerfeststoff vorgesehen und die drei Phasen werden vor und während des gleichzeitigen Aussprühens gemischt. Diese drei Phasen bestehen aus einer gasförmigen (überkritisches CO₂ und hydrophobes Beschichtungsmaterial), einer wässrigen Proteinlösung und den festen Trägerpartikeln.
3. Hierbei werden ausschließlich feste Formen der Proteinwirkstoffe direktverkapselt. Der Wirkstoff selbst wird fluidisiert und in der Wirbelschicht mit einem hydrophoben Beschichtungsmaterial umgeben.

In einem zweiten Autoklaven (linksseitig in Fig. 1) ist über fast seine gesamte Länge ein Wirbelschichteinsatz vorgesehen, der einen Verteilerboden mit Düse an seinem unteren Ende aufweist, die die jeweilige Mischung versprüht, wobei sich im Wirbelschichteinsatz die Mikropartikel ausbilden, die als trockener, schüttfähiger Feststoff aus dem Überlauf des Autoklaven an seiner oberen Seite aus der Wirbelschicht abgezogen wird. Es dürfte für den Fachmann einleuchten, dass sowohl der Mischungsautoklav, als auch der eigentliche Hochdruckwirbelschichtautoklav auf eine gewünschte Temperatur im Bereich von 35 bis 100°C beheizbar und auf einen Druck im Bereich von 8 bis 35 MPa einstellbar sind.

Die Hochdruckwirbelschicht verbessert das Feststoffhandling durch Vermeidung von Agglomeration und Kompaktierung von Schüttungen und Verbesserung der Beschichtung hinsichtlich Dicke, Dichtheit und Proteinwirkstoffabgabe. Dies ist auf die gute Durchmischung des Feststoffes in der Wirbelschicht, auf den verbesserten Stoffübergang und die Transportfähigkeit des fluidisierten Feststoffes zurückzuführen. Die erhöhten Druckbedingungen in der Hochdruckwirbelschicht ermöglichen erfindungsgemäß eine Steuerung der Abscheidebedingungen und damit der Qualität der Beschichtung. Die Beschichtung kann dabei unterschiedlichen Zwecken dienen und auch unterschiedliche Eigenschaften des Beschichtungsmaterials vorsehen, so z.B. von absolut dicht bis permeabel. Wie schon eingangs erwähnt wurde, ist der Schutz von Proteinwirkstoffen gegen vorzeitige Auflösung ein Ziel der Erfindung, mit anderen Worten: eine Retardwirkung zu erreichen.

Das Verfahrensprinzip der Beschichtung in der Hochdruckwirbelschicht nutzt die Eigenschaft von überkritischem Kohlendioxid, und polare bzw. leicht polare Substanzen bis zu einigen Gewichtsprozent lösen zu können. Diese Löslichkeit ist vor allem vom eingestellten Druck abhängig und lässt sich daher durch eine Druckänderung gezielt beeinflussen. Im allgemeinen gilt, dass sich die Löslichkeit einer Substanz in überkritischem CO₂ mit steigendem Druck bzw. steigender Dichte verbessert.

Im folgenden werden 3 Beispiele für die erfindungsgemäße Mikroverkapselung von Proteinen angegeben:
1. Beispiel:
   Wässerige Lösung von BSA (Bovine Serum Albumin) mit einem Proteingehalt von ca. 1 Gew.-% und einem geringen Gehalt an Lecithin (Tensid), ca. 0,1 Gew.-%, wird aus einem Vorratsbehälter in einen statischen Mischer gefördert. Paraffin 60 als Beschichtungsmaterial wird in überkritischem Kohlendioxid bei 28 MPa und 335 K (62°C) gelöst. Gelöste Menge ca. 1,6 Gew.-%. Die Gasphase wird in den statischen Mischer gefördert. Der statische Mischer wird bei etwas reduziertem Druck, 19 MPa, 330 K (57°C) betrieben. Dadurch fällt Paraffin 60 als flüssige Phase aus. Restlöslichkeit in der Gasphase, ca. 0,6 Gew.-%. Die wässerige Lösung wird mit der zweiphasigen Mischung aus überkritischem Kohlendioxid und Paraffin 60 gemischt. In der flüssigen Phase bilden wässerige Lösung, Tensid und Paraffin eine Emulsion. Diese bildet sich je nach Mengenverhältnis und/oder Zugabe eines Cotensids, als Makro- oder Mikroemulsion aus. Aus dem statischen Mischer gelangt die zweiphasige Mischung in die Sprühdüse, aus der sie in den Wirbelschichtraum gesprüht wird. Zustandsbedingungen: Druck 8 MPa, Temperatur 313 K (40°C). Aus zunächst flüssigen Tröpfchen enstehen durch die Entspannung und das Abkühlen feste Partikel aus Paraffin mit eingeschlossener wässeriger proteinhaltiger Lösung der Größe 50 bis 300 µm. Die Partikel werden vom Fluidisierungsgas in Schwebe gehalten. Die Geschwindigkeit des Fluidisierungsgases im Wirbelschichtraum wird der Partikelgröße angepasst, um Austrag der Partikel zu verhindern. Es baut sich eine Wirbelschicht auf, in die weiter die zweiphasige Mischung versprüht wird. Nach etwa 10 Minuter wird mit dem Abzug der Partikel aus der Wirbelschicht durch Überlauf oder zeitweises Erhöhen der Gasgeschwindigkeit begonnen. Die Schichtdicke liegt bei 1 bis 2 µm.
2. Beispiel:
   Die Vorgehensweise entspricht Beispiel 1. Als Protein wird Insulin (für Versuchszwecke Rinderinsulin) verwendet. Zur Verringerung der Temperatur zur Verflüssigung des Beschichtungsmaterials wird dem Paraffin 60 ein weiteres kurzkettiges Paraffin zugemischt, z.B. Dodekan, das in der Wirbelschicht durch das Fluidisierungsgas wieder aus dem erstarrenden Parffin 60 abgetrennt wird, so dass als Endprodukt die Beschichtung mit Paraffin 60 vorliegt.
   Die Schwierigkeit der Schichtdickenangabe liegt bei den Mikroemulsionen. Hier bildet die Verkapselung (das Paraffin) die kontinuierliche Phase, die die Mikrotröpfchen einschließt. Dennoch liegen die Zwischenräume in der angegebenen Größenordnung, also auch bei 1 bis 2 Mikrometer (maximal). Die durchschnittliche Partikelgröße in Beispiel 2 ist durch die Fluidationsgeschwindigkeit gegeben. Bei den verwendeten Mengen und Einstellungen liegt die untere Größe bei 50, die obere Größe bei 100 und die mittlere Größe (mengenmäßig) bei etwa 80 und die obere Größe bei bis 100 Mikrometer.
3. Beispiel:
   Insulinkristalle werden mit inertem festen Trägerstoff agglomeriert, Partikeldurchmesser etwa 50 bis 300 µm, um eine Fluidisierbarkeit des festen Materials zu erreichen. Die Partikel werden in den Wirbelschichtraum zusammen mit flüssigem Kohlendioxid über eine Membranpumpe gefördert. Im Wirbelschichtraum werden die Wirkstoffaggregate fluidisiert. Aus einer gasförmigen Mischung von überkritischem Kohlendioxid und Paraffin ( 28 MPa, 335 K (62°C)) wird das Beschichtungsmaterial über eine Düse in den Wirbelschichtraum eingedüst. Es entstehen flüssige kleine Tröpfchen, die sich auf den Wirkstoffagglomeraten abscheiden, verteilen und erstarren und eine geschlossene Paraffinschicht bilden. Die Schichtdicke liegt auch hier wiederum bei 1-2 µm.

## Patentansprüche

1. Verfahren zur Mikroverkapselung von organischen Stoffen in Partikelform mittels Einsprühen eines inerten überkritischen Trägergases zusammen mit dem Beschichtungsmaterial für die organischen Stoffe in eine Hochdruckwirbelschicht in einem Autoklaven, **dadurch gekennzeichnet, dass** gleichzeitig Protein(e) als organische Stoffe in Form einer wässrigen Lösung durch das Trägergas in die Hochdruckwirbelschicht mit eingesprüht werden, wobei eine durchschnittliche Partikelgröße von ca. 20 bis 1.000 µm, insbesondere 30 bis 300 µm, mit einer Schichtdicke von 0,5 bis 10 µm, insbesondere 1 bis 2 µm, entsteht.

2. Verfahren nach Anspruch 1, **dadurch gekennzeichnet, dass** zusätzlich ein Trägerfeststoff eingesetzt wird, wobei vor oder während des Aufsprühens drei Phasen miteinander vermischt werden, und dass die gasförmige Phase aus dem inerten Trägergas und dem hydrophoben Beschichtungsmaterial besteht, während die flüssige Phase eine wässrige Proteinlösung darstellt und der Trägerstoff fest ist.

3. Verfahren nach Anspruch 1 oder 2, **dadurch gekennzeichnet, dass** als inertes Trägergas überkritisches Kohlendioxid mit höherem Druck als in der Hochdruckwirbelschicht eingesetzt wird, während letztere bei einem Druck von 8 bis 35 MPa und einer Temperatur von 35 bis 100°C, insbesondere 35 bis 50°C gehalten wird.

4. Verfahren nach einem oder mehreren der vorstehenden Ansprüche 1-3, **dadurch gekennzeichnet, dass** die Beschichtung in der Hochdruckwirbelschicht kontinuierlich oder diskontinuierlich erfolgt.

5. Verfahren nach einem oder mehreren der vorstehenden Ansprüche 1-4, **dadurch gekennzeichnet, dass** das Beschichtungsmaterial von oben, von unten oder von der Seite in die Wirbelschicht eingebracht wird.

6. Verfahren nach einem oder mehreren der vorstehenden Ansprüche 1-5, dass feine Beschichtungspartikel durch Versprühen auf die Proteinoberfläche aufgrund von Haftkräften oder mittels einer Binderflüssigkeit angelagert werden, oder dass das Beschichtungsmaterial direkt aus der Gasphase heraus auf die Proteinoberfläche abgeschieden wird (chemical vaper disposition), oder dass das Beschichtungsmaterial in Form einer Lösung kleiner Tropfen versprüht wird, die sich auf die Oberfläche des Proteinpartikels ablagern (Tropfencoating).

7. Verfahren nach einem oder mehreren der vorstehenden Ansprüche 1-6, **dadurch gekennzeichnet, dass** die Beschichtung der Trägerpartikel durch eine schnelle Entspannung mittels drastischer Druckänderung in einem Zeitraum von ca. 10⁻⁶ sec. durchgeführt wird.

8. Verfahren nach einem oder mehreren der vorstehenden Ansprüche 1-7, **dadurch gekennzeichnet, dass** im Autoklaven eine minimale Fluidisationsgeschwindigkeit U^{FG} min < = 1,5 m/sec. vorgesehen wird.

9. Verfahren nach einem oder mehreren der vorstehenden Ansprüche 1-8, **dadurch gekennzeichnet, dass** ein Mischungsautoklav und mindestens ein statischer Mischer vorgesehen werden, die ersterem nachgeschaltet werden.

## Claims

1. Process for the microencapsulation of organic substances in particle form by spraying an inert supercritical carrier gas together with the coating material for the organic substances into a high pressure fluidized bed in an autoclave, **characterized in that** simultaneously protein(s) as organic substances are sprayed in the form of an aqueous solution through the carrier gas into the high pressure fluidized bed, giving an average particle size of approx. 20 to 1000 µm, particularly 30 to 300 µm, with a coating thickness of 0.5 to 10 µm, particularly 1 to 2 µm.

2. Process according to claim 1, **characterized in that** additionally a carrier solid is used and before or during spraying on three phases are mixed together, and that the gaseous phase comprises the inert carrier gas and the hydrophobic coating material, whereas the liquid phase is an aqueous protein solution and the carrier material is solid.

3. Process according to claim 1 or 2, **characterized in that** the inert carrier gas is constituted by supercritical carbon dioxide with a higher pressure than in the high pressure fluidized bed, the latter being maintained at a pressure of 8 to 35 MPa and a temperature of 35 to 100°C, particularly 35 to 50°C.

4. Process according to one or more of the preceding claims 1 to 3, **characterized in that** coating in the high pressure fluidized bed takes place continuously or discontinuously.

5. Process according to one or more of the preceding claims 1 to 4, **characterized in that** the coating material is introduced into the fluidized bed from above, from below or from the side.

6. Process according to one or more of the preceding claims 1 to 5, **characterized in that** fine coating particles are attached by spraying onto the protein surface due to adhesive forces or by means of a binder liquid, or that the coating material is deposited on the protein surface directly from the gaseous phase (chemical vapour deposition), or that the coating material is sprayed in the form of a solution of small drops which are deposited on the protein particle surface (drop coating).

7. Process according to one or more of the preceding claims 1 to 6, **characterized in that** coating of the carrier particles is performed by rapid expansion by means of a drastic pressure change in a time period of approx. 10⁻⁶ sec.

8. Process according to one or more of the preceding claims 1 to 7, **characterized in that** there is a minimum fluidization rate U^{FG} min < = 1.5 m/sec. in the autoclave.

9. Process according to one or more of the preceding claims 1 to 8, **characterized in that** provision takes place of a mixing autoclave and at least one static mixer downstream of the former.

## Revendications

1. Procédé de micro-encapsulage de substances organiques en particules par injection d'un gaz porteur surcritique inerte avec une matière d'enrobage des substances actives dans un lit fluidisé à haute pression à l'intérieur d'un autoclave, **caractérisé en ce qu'**une ou plusieurs protéines en tant que substances organiques sous forme d'une solution aqueuse sont en même temps injectées, entraînées par le gaz porteur dans le lit fluidisé à haute pression, ce qui produit une dimension moyenne des particules d'environ 20 à 1000 µm, en particulier de 30 à 300 µm, pour une épaisseur de couche de 0,5 à 10 µm, en particulier de 1 à 2 µm.

2. Procédé suivant la revendication 1, **caractérisé en ce qu'**on utilise en outre une matière de support, trois phases étant alors mélangées ensemble avant ou pendant la pulvérisation, et **en ce que** la phase gazeuse est constituée du gaz porteur inerte et de la matière hydrophobe d'enrobage tandis que la phase liquide représente une solution aqueuse de protéine(s) et la matière de support est solide.

3. Procédé suivant la revendication 1 ou 2, **caractérisé en ce qu'**on utilise comme gaz porteur inerte du dioxyde de carbone surcritique à une pression plus haute que dans le lit fluidisé à haute pression, tandis que ce lit est maintenu à une pression de 8 à 35 MPa et à une température de 35 à 100°C, en particulier de 35 à 50°C.

4. Procédé suivant l'une ou plusieurs des revendications 1 à 3 précédentes, **caractérisé en ce que** l'enrobage est effectué en continu ou en discontinu dans le lit fluidisé à haute pression.

5. Procédé suivant l'une ou plusieurs des revendications 1 à 4 précédentes, **caractérisé en ce que** la matière d'enrobage est introduite dans le lit fluidisé par le haut, par le bas ou par le côté.

6. Procédé suivant l'une ou plusieurs des revendications 1 à 5 précédentes, **caractérisé en ce que** de fines particules d'enrobage sont fixées additivement par pulvérisation sur la surface de la ou des protéines en raison de forces d'adhésion ou au moins d'un liquide liant, ou **en ce que** la matière d'enrobage est déposée directement à partir de la phase gazeuse sur la surface de la ou des protéines (Chemical vapor disposition), ou **en ce que** la matière d'enrobage est pulvérisée sous forme d'une solution de petites gouttes qui se déposent à la surface de la particule de protéine (coating par gouttes).

7. Procédé suivant l'une ou plusieurs des revendications 1 à 6 précédentes, **caractérisé en ce que** l'enrobage des particules de support est effectué par détente rapide sous l'effet d'une variation drastique de pression dans un intervalle de temps d'environ 10⁻⁶ secondes.

8. Procédé suivant l'une ou plusieurs des revendications 1 à 7 précédentes, **caractérisé en ce qu'**une vitesse minimale de fluidisation U^{FG} min inférieure à 1,5 m/s est prévue dans l'autoclave.

9. Procédé suivant l'une ou plusieurs des revendications 1 à 8 précédentes, **caractérisé en ce qu'**il est prévu un autoclave de mélange et un ou plusieurs mélangeurs statiques qui sont montés en aval du premier.
